# EUROPÄISCHE PATENTANMELDUNG

(11) **EP 1 348 749 A2**
(43) Veröffentlichungstag der Anmeldung: **01.10.2003**
(21) Anmeldenummer: 03005388.8
(22) Anmeldetag: 13.03.2003
(51) Int. Cl.: C09J 131/04

(54) **Zusammensetzung**

(30) Priorität: 25.03.2002 DE 10213227
(71) Anmelder: Bayer Aktiengesellschaft, 51368 Leverkusen (DE)
(72) Erfinder: Parg, Roland, Dr., 51373 Leverkusen (DE); Hoch, Martin, Dr., 52525 Heinsberg (DE)

(57) **Zusammenfassung**

Die vorliegende Erfindung betrifft eine Zusammensetzung, die mindestens ein Triblockcopolymerisat, ein Terpenharz, eine flüssige Komponente und ein Ethylen-Vinylacetat-Copolymerisat enthält, sowie ein Verfahren zur Herstellung dieser Zusammensetzung, seine Verwendung und ein mehrschichtiges Erzeugnis enthaltend die erfindungsgemäße Zusammensetzung.

## Beschreibung

Die vorliegende Erfindung betrifft eine Zusammensetzung, die mindestens ein Triblockcopolymerisat, ein Terpenharz, eine flüssige Komponente und ein Ethylen-Vinylacetat-Copolymerisat enthält, sowie ein Verfahren zur Herstellung dieser Zusammensetzung, seine Verwendung und ein mehrschichtiges Erzeugnis enthaltend die erfindungsgemäße Zusammensetzung.

In der Klebstoffindustrie werden Klebemassen gesucht, die nicht nur auf polaren sondern vor allen Dingen auch auf unpolaren Gegenständen haften.

US-A 4 412 030 offenbart drucksensible Schmelzkleber (hmpsa), welche aus einem speziellen Harz auf Basis Phenol und Styrol bzw. α-Methylstyrol, einem Triblock Diencopolymer und eine Ethylen-Vinylacetat-Copolymeren aufgebaut sind. Letztere weisen Vinylacetatgehalte bis max. 45 Gew.-% auf.

EP-A 0 934 990 offenbart eine Schmelzklebstoffzusammensetzung (hot melt) und deren Anwendung zum Binden von Papier bei 121°C. Unter den Bestandteilen enthält die beanspruchte Zusammensetzung ein Ethylen-Vinylacetat-Copolymer mit einem Vinylacetatgehalt von 40 Gew.-% und einem MFI- Wert von 1000. Zur Anwendung dieser Zusammensetzung auf alle Substrate und Artikel ist der Temperaturbereich nicht geeignet.

Drucksensible Klebstoffzusammensetzungen (PSA) für Polyolefinoberflächen werden in EP-A 0 822 967 offenbart. Diese enthalten in Lösung polymerisierte Acrylate mit chlorierten Polyolefinen und kohlenwasserstoffhaltige Klebrigmachern.

In US-A 4 357 459 wird ein durch Friedel-Crafts-Reaktion modifiziertes Styrolharz beschrieben, das zusammen mit Acrylaten oder Ethylen-Vinylacetat-Copolymeren als Schmelzklebestoff (hot melts (hm)) oder als drucksensibler Klebestoff (PSA) umgesetzt werden kann. Es werden Ethylen-Vinylacetate mit einem niedrigen Vinylacetatgehalt benutzt.

In JP-A 2000 142 650 wird ein Schmelzklebstoff (hot melt adhesive (hma)) erwähnt, der auf Ethylen-Vinylacetat-Copolymerisaten basiert und der bei 70°C auf bewegte Objekte aufgebracht wird.

Die klebende Zusammensetzung in JP-A 2000 137 438 basiert auf einem Ethylen-Vinylacetat-Copolymeren, das so hergestellt wurde, dass es von Glasoberflächen ablösbar ist.

In WO 00/27942 wird ein Papieretikett beschrieben, das Ethylen-Vinylacetat-Cpolymer in einer klebenden Verbindung enthält. Diese Verbindung ist meist nicht geeignet für sehr glatte Oberflächen wie Kunststoffe.

In einer Produktinformationsschrift der Firma Kuraray (LIR Technical Information 1998,9 (1,000), S. 20, Kuraray Europe GmbH, Schiess-Strasse 68, 40549 Düsseldorf) werden Schmelzklebermischungen offenbart, die sich nur im Vinylacetatgehalt der eingesetzten Ethylen-Vinylacetat-Copolymeren unterscheiden. Das Produkt mit einem erhöhten Vinylacetatgehalt von 40 Gew.-% gegenüber einem Vinylacetatgehalt von 28 Gew.-% zeigt keine Erhöhung der Klebrigkeit. Für das Produkt mit dem erhöhten Vinylacetatgehalt kann für die Haftung auf PE eine schlechtere Haftung beobachtet werden als für das Produkt mit niedrigerem Vinylacetatgehalt.

Im Stand der Technik werden verschiedene Klebemassen vorgestellt, die auf das jeweils beklebte Gut zugeschnitten sind, jedoch nicht auf glatten relativ polaren wie auch unpolaren Thermoplastoberflächen haften.

Die Aufgabe der vorliegenden Erfindung ist es daher, eine Zusammensetzung bereitzustellen, die auf polaren wie auch auf unpolaren Thermoplastoberflächen haftet und es ermöglicht, einen Kleber für thermoplastische Oberflächen bereit zu stellen.

Diese Aufgabe wird gelöst durch eine Zusammensetzung enthaltend:
- a): 10 Gew.-% bis 50 Gew.-% eines Triblockcopolymerisats der Formel (I)

ABA, (I)

wobei
A ein Block enthaltend Wiederholungseinheiten abgeleitet von Styrol oder Styrolderivaten ist,
und
B ein Block enthaltend Wiederholungseinheiten abgeleitet von einem oder mehreren verschiedenen Dienen ist, und der Anteil an Wiederholungseinheiten abgeleitet von Styrol oder einem Styrolderivat in den beiden A-Blöcken insgesamt 10 bis 40 Gew.-% beträgt,
- b): 10 Gew.-% bis 60 Gew.-% eines alicyclischen Terpenharzes
- c): 10 Gew.-% bis 40 Gew.-% einer bei 20°C flüssigen Komponente ausgewählt aus der Gruppe bestehend aus einem Dienpolymerisaten und einer raffinerierten Mineralölfraktion enthaltend gesättigte, aliphatische Kohlenwasserstoffe
- d): 10 Gew.-% bis 40 Gew.-% eines Ethylen-Vinylacetat-Copolymerisats, wobei dessen Vinylacetatgehalt mehr als 40 Gew.-% beträgt, und
- e): 0 bis 30 Gew.-% weitere Zuschlagstoffe.

In der erfindungsgemäßen Zusammensetzung liegt der MFI-Wert für das verwendete Ethylen-Vinylacetat-Copolymerisats, der nach DIN 53735 bei 190°C und einer Last von 2,16 kg gemessen wurde, bevorzugt unter 25.

Für die alicyclischen Terpenharze der erfindungsgemäßen Zusammensetzung werden vorteilhaft Terpene eingesetzt, die einen R&B-Wert im Bereich von 80 bis 150°C aurweisen.

In der erfindungsgemäßen Zusammensetzung werden für die bei 20°C flüssige Komponente raffinerierte Mineralölfraktionen bevorzugt, dies bevorzugt eine Schmelzviskosität von max. 10.000 Poise bei 38°C zeigen.

Bevorzugt ist ein Vinylacetatgehalt im Ethylen-Vinylacetat-Copolymerisat von mehr als 50 Gew.-% bei der vorliegenden Zusammensetzung.

Das Zusammenmischen der Bestandteile ist das bevorzugte Verfahren zur Herstellung der erfindungsgemäßen Zusammensetzung.

Bevorzugt wird die vorliegende Zusammensetzung als Klebemasse verwendet.

Die vorliegende Zusammensetzung wird bevorzugt zum Verkleben von Etiketten, zum Verkleben von Folien in der Verpackungsindustrie und im Baugewerbe angewendet.

Bevorzugt werden mehrschichtige Erzeugnisse, die die erfindungsgemäße Zusammensetzung enthalten.

Die erfindungsgemäße Zusammensetzung wird vorteilhaft als Klebemasse eingesetzt. Diese zeigt auch bei niedrigen Temperaturen eine hohe Klebekraft und eine gute Haftung auf polaren Substraten wie Polyester, Polycarbonate, Polyamide, ABS usw. Gleichzeitig weist sie eine gute Haftung auch auf eher weniger polaren Thermoplasten auf. Dies betrifft besonders Polyolefine. Desweiteren weisen diese Klebstoffverbindungen bei gleichzeitiger Eignung als PSA auch typische Eigenschaften von Schmelzklebern (hm) auf. Eine typische Eigenschaften von Schmelzklebern (hm) ist, dass sie bei Temperaturen im Bereich ≥ 150°C flüssig werden und somit eine Applikation über Rumpen und Düsen möglich ist. Die typische Eigenschaft eines PSA ist diejenige, dass das PSA schon bei 20°C eine Klebrigkeit besitzt, die eine Applikation ermöglicht.

Unter den üblichen Bedingungen ist die erfindungsgemäße Zusammensetzunge wasserfest, weil eine Hydrolyse in Gegenwart von Feuchtigkeit nicht eintritt. Im Gegensatz zu Polyestern und Polyurethanen wird z.B. die Hauptkette des Ethylen-Vinylacetat-Copolymeren nicht angegriffen. Das Ethylen-Vinylacetat-Copolmere der erfindungsgemäßen Zusammensetzung erleichtert ein Zumischen von polaren Komponenten,da das Ethylen-Vinylacetat-Copolymere eine erhöhte Polarität und Hydrophilie mitbringt und damit eine bessere Wechselwirkung insbesondere mit Waschwässern erlaubt.

Die erfindungsgemäße Zusammensetzung enthält vorteilhaft 10 bis 50 Gew.-% eines Triblockcopolymerisates. Bevorzugt werden 20 bis 40 Gew.-% des Triblockcopolymerisates.

Das Triblockcopolymerisate der erfindungsgemäßen Zusammensetzung ist bevorzugt eine Tricopolymerisat der Formel ABA, wobei A ein Block, der bevorzugt Wiederholungseinheiten von Styrol oder Styrolderivaten enthält, ist.

Styrolderivate sind übliche Styrolderivate insbesondere α-Methylstyrol.

Der Block B des Triblockcopolymerisates der erfindungsgemäßen Zusammensetzung enthält bevorzugt Wiederholungseinheiten abgeleitet von einem oder mehreren verschiedenen Dienen.

Die in dem Block B des Triblockcopolymerisates eingesetzten Diene sind die dem Fachmann bekannten Diene, bevorzugt Butadien und Isopren oder deren Mischungen.
Der Block B des Triblockcopolymerisates kann auch teilweise bzw. vollständig hydriert sein. In diesem Falle werden bevorzugt Ethylen-Butylen- bzw. Ethylen-Propylen-Blöcke eingesetzt.

Es ist auch möglich, neben linear aufgebauten Blockcopolymeren Produkte mit verzweigter und sternförmiger Struktur einzusetzen, wie z.B. in EP-A 0 798 358 beschrieben.

Diese Triblockcopolymerisate sorgen für eine ausreichend hohe Kohäsionskraft und ein teilweises elastisches Verhalten der erfindungsgemäßen Zusammensetzung. Sie ermöglichen, dass auch flüssige Komponenten leicht in die erfindungsgemäße Zusammensetzung einzubinden sind.

Die erfindungsgemäße Zusammensetzung enthält vorteilhaft 10 bis 60 Gew.-% eines alicyclischen Terpenharzes. Bevorzugt werden 20 bis 50 Gew.-% des alicyclischen Terpenharzes.

Die alicyclischen Terpenharze der erfindungsgemäßen Zusammensetzung entstehen bevorzugt durch Friedel-Crafts-Polymerisation geeigneter Mineralöl-Crack-Fraktionen. Diese Mineralöl-Crack-Fraktionen enthalten bevorzugt α- oder β- Pinen,

Dipenten oder Limonen. Die Polymerisation dieser Monomeren wird bevorzugt kationisch unter Initierung mit Friedel-Crafts-Katalysatoren durchgeführt.

Unter den alicyclischen Terpenharzen der erfindungsgemäßen Zusammensetzung sind auch Copolymere aus den Terpenen insbesondere α- und β-Pinen sowie Limonen und anderen Monomeren zu verstehen.

Bevorzugt werden alicyclische Terpenharze eingesetzt, die arm an Aromaten sind. So können Produktverfärbungen vermieden werden.

Die verwendeten alicyclischen Terpenharze weisen einen R&B-Wert (Ring & Ball-Wert zu bestimmen nach ASTM D-36-70 z.B. mit einer Walter Herzog R&B Apparatur, Modell MC-735) bevorzugt im Bereich von 80 bis 160°C auf.

Die alicyclischen Terpenharze der erfindungsgemäßen Zusammensetzung weisen bevorzugt eine Viskosität im Bereich von 500 mPas bis 10.000 mPas nach dem Aufschmelzen auf.

Die erfindungsgemäße Zusammensetzung enthält vorteilhaft 5 bis 40 Gew.-% einer bei 20°C flüssigen Komponente auf. Bevorzugt sind 10 bis 30 Gew.-% der flüssigen Komponente. Die bei 20°C flüssige Komponente der erfindungsgemäßen Zusammensetzung enthält bevorzugt Dienpolymerisate oder eine raffinerierte Mineralölfraktion, die bevorzugt gesättigte, aliphatische Kohlenwasserstoffe enthält.

Die Dienpolymerisate dieser flüssigen Komponente der erfindungsgemäßen Zusammensetzung sind übliche niedermolekulare Dienpolymerisate, insbesondere n-Polybutadien, n- Polyisopren sowie niedermolekulare Polyisobutylene. Bevorzugt können auch bei 20°C flüssige Poly-α-Olefine insbesondere Polyproylen, Polybutylen und hydrierte Polybutadiene als Dienpolymere der flüssigen Komponente eingesetzt werden.

Die Mineralölfraktionen der flüssigen Komponente der erfindungsgemäßen Zusammensetzung sind vorteilhaft parafinische oder naphtenbasische Mineralöle. Diese Mineralöle enthalten bevorzugt lineare, verzweigte oder cyclische Aliphaten mit C₅-C₅₀-Atomen. Bevorzugt werden solche linearen, verzweigten oder cyclischen Aliphaten mit C₅-C₄₀-Atomen.

Unter den cyclischen Aliphaten sind die Fraktionen die aus Cyclopentanen und Cyclohexanen oder deren alkylierten Derivaten bestehen, bevorzugt.

Die erfindungsgemäße Zusammensetzung enthält vorteilhaft 10 bis 40 Gew.-% eines Ethylen-Vinylacetat-Copolymeren. Bevorzugt werden 15 bis 30 Gew.-% des Ethylen-Vinylacetat-Copolymeren.

Die Ethylen-Vinylacetat-Copolymere der erfindungsgemäßen Zusammensetzung besitzen bevorzugt einen Vinylacetatgehalt von größer 50 Gew.%. Bevorzugt liegt der Vinylacetatgehalt des Ethylen-Vinylacetat-Copolymeren im Bereich von 60 bis 85 Gew.-%. Bevorzugt wird ein Ethylen-Vinylacetat-copolymeres mit einem MFI-Wert im Bereich von 3 bis 20 gemessen nach DIN 53 735 bei 190°C und einer Last von 2,16 kg verwendet.

Das Ethylen-Vinylacetat-Copolymere ist außerordentlich beständig gegen Alterungseffekte, die durch Hitze, Sauerstoff, Ozon und Licht ausgelöst werden.

Die erfindungsgemäße Zusammensetzung enthält vorteilhaft 0 bis 30 Gew.-% weitere Zusatzstoffe. Bevorzugt enthält die erfindungsgemäße Zusammensetzung 0 bis 15 Gew.-% weitere Zusatzstoffe.

Als weitere Zusatzstoffe für die erfindungsgemäße Zusammensetzung werden bevorzugt hydrophile Komponenten wie in JP-A 11 224 052 beschrieben, eingesetzt. Diese hydrophilen Komponenten können insbesondere Tenside und Harzsäuren, aber auch Copolymere mit Säurefunktion wie Ethylen-Acrylsäure-Copolymere sein. Die Ablösbarkeit der Etikellten, Folien etc. von den beklebten Substraten können durch diese hydrophilen Komponenten optimiert werden.

Zum Zweck der Erreichung hoher Scherfestigkeiten bei hohen Temperaturen kann die Zusammensetzung nach Auftragung noch vernetzt werden. Eine derartige Vernetzung ist durch Elektronenstrahlen oder durch UV-Strahlen möglich und besonders gut geeignet für dünne Schichten.

Das Ausmaß der Vernetzung muss gut kontrolliert werden, um nicht zuviel Klebrigkeit zu verlieren.

Die Vernetzung mit Elektronenstrahlen ist besonders vorteilhaft mit den erfindungsgemäßen Zusammensetzungen, weil das darin enthaltende Ethylen-Vinylacetat-Copolymer mit einem Vinylacetatgehalt ≥ 50 Gew.-% besonders leicht, das heißt mit geringen Strahlendosen vernetzbar ist. Es verliert seine Klebrigkeit kaum, während die kohäsiven Kräfte zunehmen.

Die erfindungsgemäßen Zusammensetzungen werden als Schmelzkleber (hm) bezeichnet, weil diese in einem Schmelzprozess gemischt werden müssen. Die erhaltenen klebrigen, elastischen Massen weisen eine Klebrigkeit (Tack-Wert) im Bereich von 0,5 bis 1,0 N/mm² auch bei 20°C auf und sind daher als PSA anzusehen.

Die lösungsmittelfreie Applikation auf Substrate oder Folien, auch Releaseliner, kann über entsprechende Auftragsaggregate wie Flachdüsen oder Auftragsmesser bei Temperaturen im Bereich von 140-170°C erfolgen.

Die erfindungsgemäße Zusammensetzung wird vorteilhaft zum Verkleben von Etiketten angewendet. Als Etiketten können unterschiedlichste Materialen auf verschiedene Werkstoffe verklebet werden. Bevorzugt werden als Etiketten solche aus Papier gewählt.

Die zu beklebenden Werkstoffe sind übliche Thermoplaste, bevorzugt Polyester, Polycarbonate, Polyamide, ABS aber auch Polyolefine insbesondere Polyethylen und Polypropylen.

Die erfindungsgemäße Zusammensetzung kann auch in Folien im Verpackungsbereich verwendet werden.

Weiterhin können Folienmaterialien wie low density Polyethylen (LDPE), Ethylenvinylacetat usw. auch z.B. im Baubereich zeitweise oder dauerhaft mit der erfindungsgemäßen Zusammensetzung fixiert werden.

Je nach Einsatzgebiet ist es vorteilhaft, die anderen neben dem Ethylen-Vinylacetat-Copolymeren zu verwendenden Komponenten der erfindungsgemäßen Zusammensetzung nach ihrer Stabilität gegen Alterung und Bewitterung auszuwählen.

Bevorzugt werden hydrierte Diene als B Block im Triblockcopolymerisat und hydrierte niedermolekulare Diene als flüssige Komponente der erfindungsgemäßen Zusammensetzung um bessere Alterung und Bewitterung zu gewährleisten.

### Beispiele

### Verwendete Materialien:

- VA27:: Ein Ethylen-Vinylacetat-Copolymer mit einem Vinylacetatgehalt von 27 Gew.-%, einer Dichte von 0,952 g/cm3, einem MFI-Wert (Melt-Flow-Index) von 3 (gemessen nach ASTM D 1238 und einem Schmelzpunkt von 71°C (Escorene® UL 00328 der Fa. Exxon).
- VA68:: Ein Ethylen-Vinylacetat-Copolymer mit einem Vinylacetatgehalt von 68 Gew.-%, einer Dichte von 1,08 g/cm3 und einem MFI von 30 (DIN 53 735 bei 190°C und 2,16 kg), das Produkt hat keinen Schmelzpunkt und ist völlig amorph (VP KA 8896 der Fa. Bayer AG, Leverkusen).
- VA80:: Ein Ethylen-Vinylacetat-Copolymer mit einem Vinylacetatgehalt von 80 Gew.-%, einer Dichte von 1,12 g/cm3 und einem MFI von 5 (DIN 53 735 bei 190°C und 2,16 kg), das Produkt hat keinen Schmelzpunkt und ist völlig amorph (Levamelt® 800 der Fa. Bayer AG, Leverkusen).
- Kraton® D-1161 NU:: Ein Triblockcopolymer (SIS (Styrol-Isopren-Styrol)) mit einem Gehalt von 15 Gew.-% Styrol, einem spezifizierten Molgewicht von 207 bis 237 kg/mol und einem Schmelzindex von 12 (gemessen nach ISO 1133 bei 200°C und 5 kg Last) (der Fa. Kraton Polymers) .
- LIR-30:: Ein bei 20°C flüssiges Polyisopren mit einem spezifizierten Molgewicht von 29 g/mol und einer Viskosität von 740 Poise (38°C) (der Fa. Kuraray).
- Resin P x 1000:: Ein alicyclisches Terpenharz mit einem Erweichunspunkt von 100°C (von Yasuhara Chemicals).
- Vulkanox® BKF:: Ein phenolisches Antioxidants: 2,2'- Methylen-bis-(4-methyl-6-tert.-butylphenol) (der Fa. Bayer AG, Leverkusen)

### Mischungsherstellung:

Es sind Zusammensetzungen nach folgender Rezeptur erstellt worden:
Resin P x 1000 wurde aufgeschmolzen und nach 2 Minuten das Ethylen-Vinylacetat-Copolymer zugefügt. Nach einer Minute wurde Kraton D-1161 NU und schließlich nach einer weiteren Minute Vulkanox® BKF zugesetzt. Es wurde 30 Minuten weiter gemischt, um sicherzustellen, dass die Komponenten homogen vermischt wurden.

Dann wurde das LIR-30 langsam zugegeben und die Mischung noch weitere 10 bis 15 Minuten gerührt. Die Kühlung wurde dann abgeschaltet und nach 10 Minuten die etwas zäher gewordene Mischung entnommen.

**Tabelle 1:**

| Mengenangaben der Zusammensetzung (hm-Mischung) 2, 3 und 4 Angaben in Teilen, 1 Teil = 0,62 g bezogen auf 100 Teile Polymer, wobei unter Polymer die Zusammensetzung aus VA, LIR-30 und Kraton®D-1161 N zu verstehen ist. | | | |
|---|---|---|---|
| | **Vergleich** | **Erfindungsgemäß** | **Erfindungsgemäß** |
| Komponenten | 2 | 3 | 4 |
| P x 1000 | 60 | 60 | 60 |
| VA27 | 30 | | |
| VA68 | | 30 | |
| VA80 | | | 30 |
| Kraton® D-1161 NU | 40 | 40 | 40 |
| Vulkanox® BKF | 1 | 1 | 1 |
| LIR-30 | 30 | 30 | 30 |
| Aussehen der Mischung | Grau, leicht transparent | Weiß | Weiß |
| Trübungspunkt (Koflerbank) | Schmilzt zusammen bei 230-250°C, ab 230°C nur noch leicht trübe, bei 250°C völlig klar | Bei 260°C noch leicht trübe | Bei 260°C noch leicht trübe |

Gegenüber dem Stand der Technik sind Zusammensetzungen mit einem Vinylacetatgehalte weit oberhalb von 40 Gew.% eingestellt worden und dann überraschenderweise die nachstehenden vorteilhaften Ergebnisse erzielt worden.

### Tackuntersuchungen an der Zusammensetzung

Die Substrate wurden aus dem jeweiligen Material in Form kreisförmiger Prüflinge mit einem Durchmesser von 8 Millimeter ausgeschnitten und auf Edelstahlstempel mit Cyanacrylamid-Sekundenkleber aufgeklebt.

Die Substrate waren:
- ABS-Polymer:: Platten aus Novodur® P2L-AT der Firma Bayer AG, Leverkusen
- PET-Polymer:: Platten Guttagliss Solair Extra aus Polyclear für Gewächshäuser
- Holz:: verleimtes Holz mit oberster Kaschierung aus Buchenholz, auf Brandschutzklasse B1 eingestellt
- LDPE-Folie:: Standard Baufolie 80 µm
- Glas:: Normalglas
- Polycarbonat:: Platten aus Makrolon® 1143 der Firma Bayer AG, Leverkusen, Oberfläche nicht behandelt

Eine LDPE-Folie (Klebstoffträger) wurde mit einer Lösung der Zusammensetzung mittels eines 400 µm Rakels beschichtet und über Nacht an der Luft getrocknet. Die Filmdicke betrug nach Trocknung ca. 50 µm. Das Lösungsmittel war eine Mischung aus Toluol, Essigester und Methanol im Verhältnis 50 : 30 20 Volumenteilen. Diese beschichtete LDPE-Folie wurde dann auf ein Aluminiumblech mit einem Cyanacrylatkleber geklebt, das als Probenträger diente. Dieser Lösungsauftrag ist aus Gründen der einfacheren Handhabbarkeit der Zusammensetzung für Versuche als Auftragstechnik verwendet worden.

### Durchführung der Messung

Beschreibung des Tackmessgerätes:
Der Messplatz besteht aus einer Unterlage, auf der sich die mit der erfindungsgemäßen Zusammensetzung bestrichene LDPE-Folie befindet. Das Messgerät besteht aus einem Messstempel, der mit einem runden Plättchen des Substrats belegt ist. Stempel und Substratplättchen sind fest verklebt. Der Stempel kann nun per Roboter frei auf der Klebeschicht der Unterlage mit einer festgelegten Kontaktkraft und einer festgelegten Kontaktzeit positioniert werden um dann mit Hilfe einer Kraftmessdose die Abzugskraft zum Anheben des Stempels zu ermitteln.

Die Messungen ist mit dem Tackmessgerät bei 20°C durchgeführt worden. Von jeder Partie sind 5 Einzelmessungen durchgeführt worden, jeweils gegen alle Proben. Mit einem Druck von p = 10 bar sind über einen Zeitraum von 10 Sekunden kontaktiert worden. Nach dieser Kontaktzeit ist der Verbund mit einer Abzugsgeschwindigkeit von 2 mm/s getrennt worden.

### Erhaltene Werte

**Tabelle 2**

| | Schmelzkleber 2 | | Schmelzkleber 3 | | Schmelzkleber 4 | |
|---|---|---|---|---|---|---|
| | *Tack* | Trennarbeit | *Tack* | Trennarbeit | *Tack* | Trennarbeit |
| | N/mm² | N/mm² | N/mm² | N/mm² | N/mm² | N/mm² |
| | | | | | | |
| Makrolon | 0,50 | 0,133 | 0,50 | 0,108 | 0,68 | 0,188 |
| Novodur | 0,55 | 0,128 | 0,44 | 0,134 | 0,65 | 0,278 |
| Holz | 0,46 | 0,110 | 0,32 | 0,102 | 0,56 | 0,281 |
| PET | 0,38 | 0,082 | 0,42 | 0,085 | 0,52 | 0,232 |
| LDPE | 0,77 | 0,318 | 0,53 | 0,180 | 0,60 | 0,337 |
| Glas | 0,75 | 0,160 | 0,78 | 0,154 | 0,92 | 0,235 |

### Rollenschälversuche

Weiterhin wurden Schälversuche durchgeführt. Dabei wurden verschiedene Substratfolien (PC, ABS, PET, LDPE) bzw. Substratplatten (Holz, Metall, Glas) mit der Zusammensetzung nach dem Lösungsverfahren, wie bei den Tackmessungen beschrieben, beschichtet und mit einer LDPE-Folien sowie einer Teflonfolie laminiert. An dieser Konstruktion wurde dann die Schälkraft bei 90° bestimmt, wobei jeweils die maximale und die mittlere Kraft bestimmt wurden. Die Werte von der Teflonfolie haben als Referenz für die Haftung auf einem Material relativ geringer Oberflächenkräfte gedient.

### Ausführung der Messung:

**Tabelle 3:**

| Resultate der 90° Rollenschälversuche | | | | |
|---|---|---|---|---|
| | **Schälgeschwindigkeit = 1,67 mm/s** | | | |
| | **[N]** | **hm 2** | **hm 3** | **hm 4** |
| LDPE/PC | F - max | 2,42 | 1,26 | 2,49 |
| | F - mittel | 1,52 | 0,93 | 1,70 |
| Teflon/PC | F - max | 1,29 | 1,90 | 2,06 |
| | F - mittel | 0,81 | 1,40 | 1,57 |
| LDPE/ABS | F - max | 2,08 | 1,25 | 2,79 |
| | F - mittel | 1,19 | 0,86 | 1,87 |
| Teflon/ABS | F - max | 0,91 | 1,48 | 1,93 |
| | F - mittel | 0,50 | 1,04 | 1,47 |
| LDPE/PET | F - max | 1,98 | 1,26 | 3,27 |
| | F - mittel | 1,24 | 0,93 | 1,99 |
| Teflon/PET | F - max | 1,13 | 1,27 | 1,82 |
| | F - mittel | 0,46 | 0,91 | 1,29 |
| LDPE/LDPE | F - max | 0,85 | 1,32 | 3,52 |
| | F-mittel | 0,51 | 0,67 | 2,31 |
| Teflon/LDPE | F - max | 2,16 | 0,94 | 1,86 |
| | F - mittel | 1,24 | 0,54 | 1,01 |
| LDPE/Metall | F - max | 2,25 | 2,17 | 3,18 |
| | F - mittel | 1,19 | 1,51 | 2,16 |
| Teflon/Metall | F - max | 0,83 | 1,83 | 2,17 |
| | F - mittel | 0,40 | 1,20 | 1,49 |
| LDPE/Glas | F - max | 1,68 | 1,69 | 2,87 |
| | F - mittel | 1,17 | 1,18 | 1,70 |
| Teflon/Glas | F - max | 1,26 | 1,37 | 1,83 |
| | F - mittel | 0,87 | 0,97 | 1,14 |
| LDPE/Holz | F - max | 1,36 | 1,86 | |
| | F - mittel | 0,72 | 0,97 | |
| Teflon/Holz | F - max | 0,64 | | |
| | F - mittel | 0,27 | | |

### Vergleich der Tackmessungen der erfindungsgemäßen Zusammensetzungen mit den Vergleichsversuchen

Zusammensetzung (hm) 2 besitzt nur eine moderate Haftung auf den getesteten Substraten mit der Ausnahme von LDPE. Letzteres kann erklärt werden durch die geringere Polarität des verwendeten Ethylen-Vinylacetat-Copolymeren, die eine bessere Kompatibilität zum unpolaren LDPE bewirkt.

In der Zusammensetzung (hm) 3 wird eine Ethylen-Vinylacetat-Copolymer verwendet, welches mit 68 Gew.-% Vinylacetatgehalt ebenfalls sehr polar ist. Dieses Ethylen-Vinylacetat-Copolymere weist einen besonders hohen MFI-Wert auf und kann daher kaum zu kohäsiven Festigkeit beitragen.

Die Zusammensetzung 3 (hm) erzielt daher gleiche Werte wie Vergleich 2.

Zusammensetzung (hm) 4 hat in allen Fällen außer bei LDPE die höchsten Tackwerte und auch die höchsten Trennarbeiten. Gegenüber den polaren Thermoplastsubstraten wie Polycarbonat, ABS und PET werden mit der Zusammensetzung 4 deutlich höhere Tackwerte und Trennarbeiten erzielt. Weiterhin werden auch auf Holz und Glas die besten Werte erzielt.

Der Vorteil von Zusammensetzung (hm) 4 liegt darin, dass deutlich verbesserte Klebewerte auf polaren Substraten erzielt werden, während gleichzeitig hohe Werte gegenüber unpolaren Thermoplasten wie LDPE beibehalten werden.

Diese Effekte sind überraschend, da die erfindungsgemäßen Zusammensetzungen unter den hier gewählten Applikationstemperaturen noch mehrphasig sind und damit der Einfluss der polareren Rezepturkomponente Ethylen-Vinylacetat-Copolymer nicht vorhersehbar war.

### Vergleich der Schälversuche der erfindungsgemäßen Zusammensetzungen mit der Vergleichszusammensetzung

Die Schälversuche mit Teflonfolie und verschiedenen Substraten geben im wesentlichen die Adhesionskräfte zwischen der Zusammensetzung und der Teflonfolie wieder. Sie sind ein Maß für die Klebrigkeit der Zusammensetzung in horizontaler Richtung. Es zeigt sich, dass die erhaltenen Werte für die Zusammensetzung (hm) 3 und 4 fast immer höher liegen als die für die Zusammensetzung (hm) 2. Mit der Zusammensetzung 3 werden hohe Werte erhalten, weil anzunehmen ist, das der hohe MFI-Wert und damit das niedrige Molgewicht des enthaltenen Ethylen-Vinylacetat-Copolymeren zu hoher Klebrigkeit führt. Die Werte der Zusammensetzung 4 sind noch höher.

Nur im Falle der LDPE-Folie zeigt die Zusammensetzung (hm) 2 (Vergleich) die höchsten Werte, wobei die Zusammensetzung (hm) 4 zumindest ähnliche Schälkräfte liefert.

Die Schälversuche mit LDPE-Folie und verschiedenen Substraten werden sowohl durch Adhesionskräfte wie auch kohäsiven Kräfte der Zusammensetzungs beeinflusst.

Die Zusammensetzung (hm) 4 liefert hohe Werte auf Metall und Glas als Untergrund. Zusammensetzung (hm) 3 zeigt hier ein ähnliches Verhalten wie die Zusammensetzung (hm) 2. Bei den Messungen mit den Thermoplastfolien (ABS, PET und LDPE) gegen LDPE ist die Zusammensetzung (hm) 4 besser geeignet. Nur im Falle LDPE gegen PC zeigen die Zusammensetzungen (hm) 2 (Vergleich) und 4 ähnliche Werte.

Bei der Konstruktion LDPE/LDPE werden mit der Zusammensetzung (hm) 4 besonders hohe Schälkräfte gemessen, die mit Blick auf die Tackwerte und die Trennarbeiten nicht zu erwarten waren.

Dies war nicht zu erwarten, weil das erfindungsgemäße Ethylen-Vinylacetat-Copolymer mit einem hohen Vinylacetatgehaltes besonders polar ist und wenig kompatibel zum unpolaren LDPE.

Es kann festgehalten werden, dass Zusammensetzungen vom Typ 3 und 4 die einen Vinylacetatgehalt größer 40 Gew.-% enthalten in fast allen Fällen höhere Werte liefern als die Vergleichsversuche. Der gezielte Einsatz der Ethylen-Vinylacetat-Copolymere mit hohem Vinylacetatgehalt erlaubt die Haftung auf polaren Untergründen besonders zu erhöhen. Daher sind die erfindungsgemäßen Zusammensetzungen auf unterschiedlich polaren Substraten anwendbar.

## Patentansprüche

1. Eine Zusammensetzung enthaltend
a) 10 Gew.-% bis 50 Gew.-% eines Triblockcopolymerisats der Formel (I)
ABA, (I)
wobei
A ein Block enthaltend Wiederholungseinheiten abgeleitet von Styrol oder Styrolderivaten ist
und
B ein Block enthaltend Wiederholungseinheiten abgeleitet von einem oder mehreren verschiedenen Dienen ist
und der Anteil an Wiederholungseinheiten abgeleitet von Styrol oder einem Styrolderivat in den beiden A-Blöcken insgesamt 10 bis 40 Gew.-% beträgt,
b) 10 Gew.-% bis 60 Gew.-% eines alicyclischen Terpenharzes,
c) 10 Gew.-% bis 40 Gew.-% einer bei 20°C flüssigen Komponente ausgewählt aus der Gruppe bestehend aus einem Dienpolymerisat und einer raffinerierten Mineralölfraktion enthaltend gesättigte, aliphatische Kohlenwasserstoffen,
d) 10 Gew.-% bis 40 Gew.-% eines Ethylen-Vinylacetat-Copolymerisats, wobei dessen Vinylacetatgehalt mehr als 40 Gew.-% beträgt,
und
e) 0 bis 30 Gew.-% weitere Zuschlagstoffe.

2. Die Zusammensetzung nach Anspruche 1, wobei der MFI-Wert des Ethylen-Vinylacetat-Copolmyerisats, der nach DIN 53735 bei einer Temperatur von 190°C und einer Last von 2,16 kg gemessen wird, unter 25 liegt.

3. Die Zusammensetzung nach einem der Ansprüche 1 bis 2, wobei im alicyclischen Terpenharz Terpene mit einen R&B-Wert im Bereich von 80 bis 150°C enthalten sind.

4. Die Zusammensetzung nach einem der Ansprüchen 1 bis 3, wobei die bei 20°C flüssige Komponente aus raffinierten Mineralölfraktionen besteht und die eine Schmelzviskosität von maximal 10.000 Poise bei 38°C aufweist.

5. Die Zusammensetzung nach einem der Ansprüchen 1 bis 4, wobei der Vinylacetatgehalt im Ethylen-Vinylacetat-Copolymerisat mehr als 50 Gew.-% beträgt.

6. Verfahren zur Herstellung der Zusammensetzung nach einem der Ansprüche 1 bis 5, wobei die Bestandteile der Zusammensetzung vermischt werden.

7. Verwendung der Zusammensetzung nach einem der Ansprüche 1 bis 5 als Klebemasse.

8. Verwendung nach Anspruch 7, wobei die Klebemasse zum Verkleben von Etiketten, zum Verkleben von Folien in der Verpackungsindustrie und im Baugewerbe verwendet wird.

9. Mehrschichtiges Erzeugnis enthaltend eine Schicht, die aus der Zusammensetzung nach einem der Ansprüche 1 bis 5 erhältlich ist.
